# EUROPÄISCHE PATENTSCHRIFT

(11) **EP 1 266 155 B1**
(45) Veröffentlichungstag und Bekanntmachung des Hinweises auf die Patenterteilung: **02.01.2008**
(21) Anmeldenummer: 02702219.3
(22) Anmeldetag: 22.01.2002
(51) Int. Cl.: F16H 59/04

(54) **SCHALTVORRICHTUNG ZUM UMSCHALTEN ZWISCHEN UNTERSCHIEDLICHEN BETRIEBSZUSTÄNDEN EINES KRAFTFAHRZEUGGETRIEBES**
SHIFTING DEVICE FOR SHIFTING BETWEEN DIFFERENT OPERATING STATES OF A MOTOR VEHICLE TRANSMISSION
DISPOSITIF DE COMMUTATION POUR PASSER ENTRE DIFFERENTS ETATS DE FONCTIONNEMENT D'UNE BOITE DE VITESSES D'AUTOMOBILE

(30) Priorität: 22.01.2001 DE 10102843
(43) Veröffentlichungstag der Anmeldung: 18.12.2002
(73) Patentinhaber: ZF Lemförder Metallwaren AG, 49441 Lemförde (DE)
(72) Erfinder: KLIEMANNEL, Wolfgang, 49448 Lemförde (DE)
(86) Internationale Anmeldenummer: PCT/DE2002/000189
(87) Internationale Veröffentlichungsnummer: WO 2002/057658

(56) Entgegenhaltungen:
- EP-A- 0 075 693
- EP-A- 0 620 385
- EP-A- 0 936 385

## Beschreibung

Die Erfindung betrifft eine Schaltvorrichtung zum Umschalten zwischen unterschiedlichen Betriebszuständen eines Kraftfahrzeuggetriebes nach dem Oberbegriff des Patentanspruchs 1.

Derartige Schaltvorrichtungen sind aus dem Stand der Technik bekannt. In der DE 694 08 356 T2 (EP 0 620 385 B1) ist eine Schaltvorrichtung mit einem schwenkbar gelagerten Schalthebel offenbart, der über eine Schwenkbewegung in einer ersten Richtung zwischen zwei Schaltgassen, nämlich zwischen einem Hauptweg und einem Hilfsweg, umgeschaltet werden kann. Ferner kann der Schalthebel in einer zu der ersten Richtung senkrecht verlaufenden zweiten Richtung in unterschiedliche Schaltstellungen geschwenkt werden, wobei die unterschiedlichen Schaltstellungen des Schalthebels mit Hilfe von vier Sensoren und vier Signalgebern erfasst werden. Dabei sind die vier Sensoren auf einer im Gehäuse der Schaltvorrichtung feststehenden Platte und die vier Signalgeber auf einer über der feststehenden Platte liegenden und mit dem Schalthebel gekuppelten beweglichen Platte angeordnet. Die Sensoren sind als Hall-Sensoren und die Signalgeber als Magnete ausgebildet, wobei von den Hall-Sensoren der jeweiligen Schaltstellung entsprechende elektrische Signale an ein Elektronikmodul abgegeben werden, welches das Getriebe über Aktuatoren ansteuert. Einer dieser Sensoren ist dabei derart angeordnet, dass über diesen festgestellt werden kann, ob der Schalthebel in den Hauptweg oder in den Hilfsweg geschaltet ist.

Ausgehend von diesem Stand der Technik liegt der Erfindung die Aufgabe zugrunde, eine Schaltvorrichtung der eingangs genannten Art zu schaffen, deren Aufbau und Herstellung vereinfacht ist.

Erfindungsgemäß wird diese Aufgabe durch eine Vorrichtung mit den Merkmalen nach dem Patentanspruch 1 gelöst. Bevorzugte Weiterbildungen sind in den Unteransprüchen beschrieben.

Die erfindungsgemäße Schaltvorrichtung zum Umschalten zwischen unterschiedlichen Betriebszuständen eines Kraftfahrzeuggetriebes weist einen in einer Halterung bewegbar gelagerten Schalthebel auf, der in einer ersten Richtung zwischen zwei Schaltgassen bewegbar ist und zusätzlich in einer zweiten Richtung entlang einer ersten der beiden Schaltgassen in drei Schaltstellungen bewegbar ist. Die Schaltvorrichtung weist einen Signalgeber zum Abgeben eines Gebersignals und wenigstens drei im Abstand zu dem Signalgeber und in Form eines Dreiecks angeordnete Sensoren zum Erfassen des Gebersignals auf. Die Sensoren und der Signalgeber sind mittels des Schalthebels relativ zueinander bewegbar, und von den Sensoren werden die jeweilige Schaltstellung charakterisierende elektrische Signale zumindest mittelbar an eine Auswerteeinrichtung abgegeben, mittels welcher das Getriebe in Abhängigkeit von den elektrischen Signalen in unterschiedliche Betriebszustände gestellt werden kann. Der Signalgeber ist dabei derart ausgebildet, dass das Gebersignal am Ort der Sensoren eine Fläche überstreicht, die größer oder gleich der Fläche eines Rechtecks ist, in welcher das Dreieck deckungsgleich abgebildet werden kann, wobei eine Seite des Rechtecks parallel zu der ersten Schaltgasse verläuft und in einer ersten der drei Schaltstellungen alle drei Sensoren mit dem Gebersignal in Wechselwirkung stehen.

Die unterschiedlichen Schaltstellungen des Schalthebels in der ersten Schaltgasse können dadurch erkannt werden, dass der Signalgeber und die in Form eine Dreiecks angeordneten Sensoren (Dreiecksanordnung) mittels des Schalthebels relativ zueinander bewegt bzw. verschoben werden können. Je nach Schaltstellung stehen dabei unterschiedliche Kombinationen der Sensoren in Wechselwirkung mit dem Gebersignal, so dass anhand der von den Sensoren abgegebenen elektrischen Signale die jeweils eingenommene Schaltstellung eindeutig bestimmt werden kann. Über die gesamte überstrichene Fläche hinweg weist somit das Gebersignal wenigstens eine derartige Signalstärke auf, dass die Sensoren mit dem Gebersignal in Wechselwirkung treten können.

Die erfindungsgemäße Schaltvorrichtung weist nur einen einzigen Signalgeber für drei Sensoren auf, weshalb die Anzahl der Bauelemente reduziert und somit der Aufbau vereinfacht ist. Da nicht mehrere Signalgeber auf einer Platte positioniert und befestigt werden müssen, ist auch die Herstellung der erfindungsgemäßen Schaltvorrichtung vereinfacht.

Ist die von dem Gebersignal überstrichene Fläche größer als die Fläche des Rechtecks, so kann auch die überstrichene Fläche von der Rechteckform abweichen.

Ist der Signalgeber derart gestaltet, dass mit zunehmender Entfernung vom Signalgeber die von dem Gebersignal durchflutete Fläche ebenfalls zunimmt, so kann die das Gebersignal abgebende aktive Fläche des Signalgebers kleiner als die Fläche des Rechtecks sein. Bevorzugt ist die aktive Fläche des Signalgebers aber ungefähr gleich der Fläche des Rechtecks, so dass der Aufwand für die Dimensionierung der aktiven Fläche hinsichtlich der Dreiecksanordnung verringert ist.

Die Sensoren können auf einer am Schalthebel befestigten Leiterplatte und der Signalgeber kann an der Halterung der Schaltvorrichtung vorgesehen sein. Bevorzugt sind jedoch die Sensoren an der Halterung und der Signalgeber am Schalthebel angeordnet. Da der Signalgeber in der Regel mit wenig oder sogar keinen elektrischen Anschlüssen versehen ist, jeder Sensor aber wenigstens zwei elektrische Anschlüsse aufweist, ist durch diese bevorzugte Anordnung der elektrische Verdrahtungsaufwand entlang des beweglichen Schalthebels verringert.

Die Sensoren können auf einer ebenen Leiterplatte befestigt sein. Bei einem schwenkbar gelagerten Schalthebel erfolgt die Bewegung der an diesem befestigten Sensoren bzw. des an diesem befestigten Signalgebers allerdings auf einer gekrümmten Bahn. Damit der von der Schwenklagerung des Schalthebels aus gesehene radiale Abstand zwischen den Sensoren und dem Signalgeber möglichst wenig durch die Schwenkbewegung des Schalthebels beeinflusst wird, sind die Sensoren bevorzugt auf einer gekrümmten Leiterplatte angeordnet, deren Krümmung zu dem gekrümmten Schwenkweg des Schalthebels korrespondiert. Dadurch kann die Wechselwirkung zwischen dem Signalgeber und den Sensoren verbessert werden.

Der Signalgeber kann eine Beleuchtungsquelle bzw. ein von einer Beleuchtungsquelle angestrahlter Reflektor sein, wobei die Sensoren als optische Sensoren ausgelegt sind und das Gebersignal in Form von optischer Strahlung abgegeben wird. Dabei sind der Signalgeber und die Sensoren nicht auf das sichtbare Spektrum der elektromagnetischen Wellen beschränkt und können zum Beispiel auch über Infrarotstrahlen miteinander in Wechselwirkung treten. Auch kann ein Magnet als Signalgeber vorgesehen sein, wobei das Gebersignal in Form eines Magnetfeldes abgegeben wird. Der Magnet kann als Elektromagnet ausgebildet sein, der über elektrische Leitungen mit Strom versorgt wird. Bevorzugt ist aber ein Permanentmagnet als Signalgeber vorgesehen, wobei die Sensoren durch Hall-Sensoren gebildet werden. Bei einem Permanentmagnet sind keine elektrischen Anschlüsse zum Betreiben des Signalgebers erforderlich, so dass der Verdrahtungsaufwand insgesamt verringert ist.

Die drei Schaltstellungen in der ersten Schaltgasse können dafür verwendet werden, das Kraftfahrzeuggetriebe einen oder mehrere Gänge herauf bzw. herunterzuschalten, ohne mit dem Schalthebel die erste Schaltgasse verlassen zu müssen. Eine vordere der drei Schaltstellungen ist dabei für das Heraufschalten und eine hintere der drei Schaltstellungen für das Herunterschalten der Gänge vorgesehen. Die drei Schaltstellungen liegen auf einer Geraden, und die Lagerung des Schalthebels ist derart ausgelegt, dass die mittlere Schaltstellung eine stabile Mittellage zwischen der vorderen und der hinteren Schaltstellung bildet. Dabei sind die vordere und die hintere Schaltstellung als instabile Schaltstellungen ausgelegt, so dass der Schalthebel automatisch in die mittlere Schaltstellung zurückkehrt, wenn der Schalthebel vom Anwender in einer anderen als der mittleren Schaltstellung losgelassen bzw. freigegeben wird. Da die Anordnung der Sensoren mit den Schaltstellungen des Schalthebels in Beziehung steht, sind die drei Sensoren bevorzugt in Form eines gleichschenkeligen Dreiecks angeordnet, wobei die zwischen den gleichen Schenkeln eingeschlossene Dreicksseite parallel zu der ersten Schaltgasse verläuft. Durch diese Anordnung der Sensoren wird erreicht, dass zwischen der vorderen und der mittleren Schaltstellung der gleiche Abstand vorgesehen ist, wie zwischen der mittleren und der hinteren Schaltstellung.

Werden bei der erfindungsgemäßen Schaltvorrichtung die durch die Sensoren gebildeten Eckpunkte des Dreiecks auf die durch die zweite Richtung definierte Gerade projiziert, so bilden die durch die Projektion hervorgegangenen Bildpunkte ' der Eckpunkte einen Reihe von drei im Abstand zueinander angeordneten Punkten auf dieser Geraden. Mit dem dem mittleren Bildpunkt zugeordneten Sensor kann erkannt werden, ob der Schalthebel in die erste Schaltgasse gestellt ist, weshalb dieser Sensor auch als Schaltgassensensor bezeichnet wird. Mit den den äußeren Bildpunkten zugeordneten Sensoren können die einzelnen Schaltstellungen in der ersten Schaltgasse erkannt werden, weshalb diese Sensoren auch als Schaltstellungssensoren bezeichnet werden.

Grundsätzlich würden die beiden Schaltstellungssensoren zum Erfassen der drei Schaltstellungen in der ersten Schaltgasse ausreichen. Durch den zusätzlich vorgesehenen Schaltgassensensor wird aber eine die Sicherheit erhöhende Redundanz erzielt.

Unabhängig von der Schaltstellung steht in der ersten Schaltgasse wenigstens einer der Schaltstellungssensoren in Wechselwirkung mit dem Gebersignal, wobei ferner das von dem Schaltgassensensor abgegebene elektrische Signal die Information trägt, dass der Schalthebel in die erste Schaltgasse geschaltet ist. Dabei kann der Schaltgassensensor hinsichtlich des Dreiecks entweder der zweiten Schaltgasse zugewandt oder von dieser abgewandt angeordnet sein. Ist aber der Schaltgassensensor auf der der zweiten Schaltgasse abgewandten Seite der durch die beiden Schaltstellungssensoren definierten Geraden angeordnet, so können zum Beispiel die Schaltstellungssensoren bzw. die von denen abgegebenen elektrischen Signale mit Hilfe des Schaltgassensensors deaktiviert werden, wenn der Schalthebel aus der ersten Schaltgasse herausbewegt wird, da bei dieser Anordnung der Schaltgassensensor als erster Sensor aus dem Einflussbereich des Gebersignals herausfällt. Bevorzugt ist deshalb der Schaltgassensensor auf der der zweiten Schaltgasse abgewandten Seite der durch die beiden Schaltstellungssensoren definierten Geraden angeordnet.

Jede der drei Schaltstellungen kann diejenige Schaltstellung sein, die als erste angenommen wird, wenn der Schalthebel aus der zweiten Schaltgasse in die erste Schaltgasse geschaltet wird. Bevorzugt ist aber die erste Schaltstellung diejenige Schaltstellung, die zuerst angenommen wird, wenn der Schalthebel aus der zweiten Schaltgasse in die erste Schaltgasse geschaltet wird. Gemäß dieser Ausgestaltung der Erfindung treten also zunächst alle drei Sensoren mit dem Gebersignal in Wechselwirkung, wenn der Schalthebel in die erste Schaltgasse bewegt wird. Gemäß einer weiteren bevorzugten Ausgestaltung der Erfindung bildet die erste Schaltstellung dabei gleichzeitig die mittlere Schaltstellung.

Wird der Schalthebel aus der mittleren Schaltstellung heraus entlang der ersten Schaltgasse in eine als Vorwärtsrichtung bezeichnete Richtung bewegt, so gelangt er in eine zweite der drei Schaltstellungen. Wird dagegen der Schalthebel in die der Vorwärtsrichtung entgegengesetzte und als Rückwärtsrichtung bezeichnete Richtung bewegt, so gelangt er in die dritte Schaltstellung.

In der zweiten Schaltstellung stehen der in Vorwärtsrichtung angeordnete Schaltstellungssensor und der Schaltgassensensor mit dem Gebersignal in Wechselwirkung, wohingegen der in Rückwärtsrichtung angeordnete Schaltstellungssensor nicht mit dem Gebersignal in Wechselwirkung steht. In der dritten Schaltstellung stehen der in Rückwärtsrichtung angeordnete Schaltstellungssensor und der Schaltgassensensor mit dem Gebersignal in Wechselwirkung, wohingegen der in Vorwärtsrichtung angeordnete Schaltstellungssensor nicht mit dem Gebersignal in Wechselwirkung steht.

Der Schaltgassensensor ist zum bloßen Erkennen des ersten, des zweiten oder des dritten Schaltzustandes nicht erforderlich, allerdings könnte die Schaltvorrichtung ohne Schaltgassensensor den folgenden Nachteil aufweisen: Beim Herausschalten des in der ersten Schaltstellung angeordneten Schalthebels aus der ersten Schaltgasse fallen beide Schaltstellungssensoren aufgrund von Montageungenauigkeiten und Bauelementtoleranzen regelmäßig nicht gleichzeitig aus dem Einflussbereich des Gebersignals heraus. In diesem Fall zeigen die von den Sensoren abgegebenen elektrischen Signale aber entweder die zweite oder die dritte Schaltstellung an, was die Auswerteeinrichtung dazu veranlassen könnte, den Betriebszustand des Getriebes zu ändern, obwohl der Anwender den Schalthebel nur aus der ersten Schaltgasse herausschalten wollte und keine Änderung des Betriebszustandes beabsichtigte.

Bei der bevorzugten Ausgestaltung der Erfindung fällt beim Herausschalten des Schalthebels aus der ersten Schaltgasse der Schaltgassensensor als erster Sensor aus dem Einflussbereich des Gebersignals heraus, bevor einer oder beide der Schaltstellungssensoren aus dem Einflussbereich des Signalgebers herausfallen und der oben angesprochene Nachteil auftreten kann. Somit kann der Schaltgassenwechsel eindeutig erkannt werden. Die von den Schaltstellungssensoren abgegebenen elektrischen Signale (Schaltstellungssignale) werden also nur dann für das Stellen des Betriebszustandes des Getriebes berücksichtigt, wenn der Schaltgassensensor mit dem Gebersignal in Wechselwirkung steht bzw. das von dem Schaltgassensensor abgegebene elektrische Signal (Schaltgassensignal) die Information trägt, dass der Schalthebel in die erste Schaltgasse gestellt ist. Dadurch kann der oben beschriebene Nachteil behoben werden.

Alle drei Sensoren können während der Verwendung der erfindundgsgmäßen Schaltvorrichtung dauerhaft aktiviert sein, wobei die Schaltstellungssignale und das Schaltgassensignal der Auswerteeinrichtung zugeführt sind. Bevorzugt sind aber die Schaltstellungssensoren bzw. die Schaltstellungssignale von dem Schaltgassensensor deaktiviert, wenn der Schalthebel aus der ersten Schaltgasse herausgeschwenkt ist und von dem Schaltgassensensor aktiviert, wenn der Schalthebel in die erste Schaltgasse geschwenkt ist. In diesem Fall dient das Schaltgassensignal als Steuersignal für die Schaltstellungssensoren bzw. die Schaltstellungssignale und braucht nicht mehr der Auswerteeinrichtung zugeführt werden, so dass die dafür vorgesehene elektrische Verbindung bzw. Leitung entfallen kann. Dadurch wird die erfindungsgemäße Schaltvorrichtung weiter verbilligt und vereinfacht.

Für die nachfolgende Beschreibung der Aktivierung und der Deaktivierung der Schaltstellungssensoren bzw. der Schaltstellungssignale wird davon ausgegangen, dass das von jedem der Sensoren abgegebene Signal einen logischen H-Pegel aufweist, wenn der mit Strom versorgte Sensor mit dem Gebersignal in Wechselwirkung steht, einen logischen L-Pegel aufweist, wenn der mit Strom versorgte Sensor nicht mit dem Gebersignal in Wechselwirkung steht und einen logischen L-Pegel bzw. einen zumindest vom H-Pegel abweichenden dritten Pegel aufweist, wenn die Stromzufuhr für den Sensor abgeschaltet ist. Dabei befindet sich der Sensor im aktivierten Zustand, wenn der Sensor mit Strom versorgt wird und im deaktivierten Zustand, wenn der Sensor nicht mit Strom versorgt wird.

Die Aktivierung und die Deaktivierung der Schaltstellungssensoren kann zum Beispiel dadurch realisiert werden, dass von dem Schaltgassensensor die Stromversorgung für die Schaltstellungssensoren eingeschaltet bzw. abgeschaltet wird. Da im deaktivierten Zustand der Schaltstellungssensoren beide Schaltstellungssignale einen logischen L-Pegel bzw. den dritten Pegel aufweisen, kann die Auswerteeinrichtung allein anhand der Schaltstellungssignale erkennen, dass der Schalthebel nicht in die erste Schaltgasse gestellt ist. Wird eine Drei-Zustands-Logik verwendet, kann der dritte Pegel auch dem hochohmigen Zustand entsprechen.

Die Aktivierung und die Deaktivierung der Schaltstellungssignale kann dadurch erfolgen, dass jedes Schaltstellungssignal einer logischen UND-Verknüpfung mit dem Schaltgassensignal unterzogen wird. In diesem Fall wird jedes Schaltstellungssignal in Form eines verknüpften Signals an die Auswerteeinrichtung abgegeben. Im deaktivierten Zustand des Schaltstellungssignals weist das Schaltgassensignal einen logischen L-Pegel auf, wodurch auch das verknüpfte Signal einen logischen L-Pegel aufweist. Im aktivierten Zustand des Schaltstellungssignals weist das Schaltgassensignal dagegen einen logischen H-Pegel auf, so dasss der logische Pegel des verknüpften Signals stets dem logischen Pegel des Schaltstellungssignals entspricht. Bei der Aktivierung bzw. Deaktivierung der Schaltstellungssignale werden dieselben mittelbar, und zwar in Form von verknüpften Signalen an die Auswerteeinrichtung abgegeben.

Die Erfindung wird nachfolgend anhand einer bevorzugten Ausführungsform unter Bezugnahme auf die Zeichnung beschrieben. In der Zeichnung zeigen:
- Figur 1:: eine schematische Darstellung einer Ausführungsform der erfindungsgemäßen Schaltvorrichtung, wobei der Schalthebel in die zweite Schaltgasse geschwenkt ist
- Figur 2:: eine schematische Darstellung der Ausführungsform, wobei der Schalthebel in eine in der ersten Schaltgasse vorgesehene erste Schaltstellung geschwenkt ist,
- Figur 3:: eine schematische Darstellung der Ausführungsform, wobei der Schalthebel in eine zweite Schaltstellung geschwenkt ist und
- Figur 4:: eine schematische Darstellung der Ausführungsform, wobei der Schalthebel in eine dritte Schaltstellung geschwenkt ist.

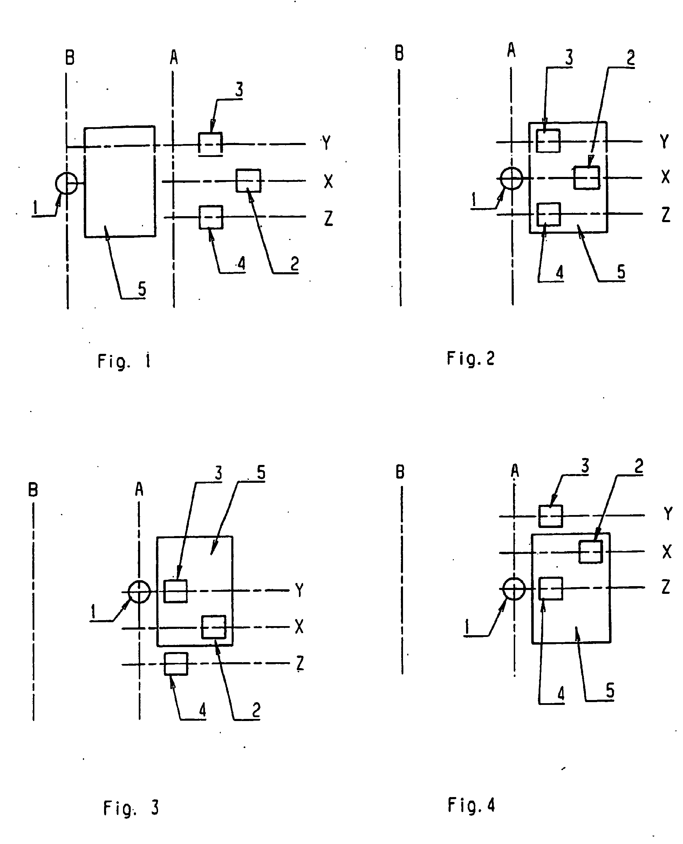

Aus Figur 1 ist eine schematische Darstellung einer Ausführungsform der erfindungsgemäßen Schaltvorrichtung mit einem schwenkbar gelagerten Schalthebel 1 ersichtlich, der in zwei Schaltgassen A und B schwenkbar ist, wobei sich gemäß der Figur 1 der Schalthebel 1 in der zweiten Schaltgasse B befindet. In der ersten Schaltgasse A ist der Schalthebel 1 in drei Schaltstellungen X, Y und Z schwenkbar, wobei drei der ersten Schaltgasse zugeordnete Hall-Sensoren 2, 3 und 4 in Form eines gleichschenkeligen Dreiecks angeordnet sind. Die die beiden gleichen Schenkel des Dreiecks verbindende Grundseite verläuft parallel zur ersten Schaltgasse A, wobei die beiden die Grundseite begrenzenden Hall-Sensoren 3 und 4 im Folgenden als Schaltstellungssensoren 3 und 4 bezeichnet werden. Der der Grundseite gegenüberliegende und im Folgenden als Schaltgassensensor bezeichnete Hall-Sensor 2 ist auf der der zweiten Schaltgasse B abgewandten Seite angeordnet. An dem Schalthebel 1 ist ein Permanentmagnet angebracht, dessen Magnetfeld 5 mit den Hall-Sensoren 2, 3 und 4 in Wechselwirkung treten kann. Der den Sensoren 2, 3 und 4 zugewandte Pol des Permanentmagneten ist rechteckig und weist eine derart große Oberfläche auf, dass die dreieckige Sensoranordnung 2, 3 und 4 von dessen Magnetfeld 5 vollständig überdeckt werden kann.

Wie aus Figur 2 ersichtlich, überdeckt das magnetische Feld 5 des rechteckigen Permanentmagneten alle drei Hall-Sensoren 2, 3 und 4, wenn der Schalthebel 1 in eine erste der drei Schaltstellungen X geschwenkt ist, die nachfolgend als Neutralstellung bezeichnet wird. In der ersten Schaltstellung stehen also alle drei Hall-Sensoren mit dem Magnetfeld 5 des Permanentmagneten in Wechselwirkung. In Richtung der Schaltgasse A befindet sich eine als Aufwärtsstellung bezeichnete zweite der Schaltstellungen Y vor und die dritte als Abwärtsstellung bezeichnete Schaltstellung Z hinter der Neutralstellung X des Schalthebels, wobei der Aufwärtsstellung Y und der Abwärtsstellung Z jeweils einer von den Schaltstellungssensoren 3 und 4 zugeordnet ist.

Gemäß Figur 3 ist der Schalthebel 1 in die Aufwärtsstellung Y geschwenkt, so dass das Magnetfeld 5 des Permanentmagneten den der Aufwärtsstellung Y zugeordneten Schaltstellungssensor 3 und den Schaltgassensensor 2 überdeckt, wobei der der Abwärtsstellung Z zugeordnete Schaltstellungssensor 4 nicht von dem Magnetfeld 5 des Permanentmagneten überdeckt ist. In der zweiten Schaltstellung stehen also der Schaltgassensensor 2 und der Schaltstellungssensor 3 mit dem Magnetfeld 5 des Permanentmagneten in Wechselwirkung.

Ist dagegen, wie aus Figur 4 ersichtlich, der Schalthebel 1 in die Abwärtsstellung Z geschwenkt, so überdeckt das Magnetfeld 5 des Permanentmagneten den der Abwärtsstellung Z zugeordneten Schaltstellungssensor 4 und den Schaltgassensensor 2, wobei der der Aufwärtsstellung Y zugeordnete Schaltstellungssensor 3 nicht von dem Magnetfeld 5 des Permanentmagneten überdeckt ist. In der dritten Schaltstellung stehen also der Schaltgassensensor 2 und der Schaltstellungssensor 4 mit dem Magnetfeld 5 des Permanentmagneten in Wechselwirkung.

Wie aus den Figuren ersichtlich, ist das Magnetfeld 5 etwas größer als die minimale Fläche eines Rechtecks, in welche das von den Sensoren 2, 3 und 4 gebildete Dreieck kongruent abbildbar ist, wobei eine Seite dieses Rechtecks parallel zur ersten Schaltgasse A verläuft. Dies liegt daran, da gemäß dieser Ausführungsform die Oberfläche des den Sensoren zugewandten Pols des Permanentmagneten ungefähr gleich der Fläche dieses Rechtecks ist, wobei aufgrund des Abstandes der Sensoren 2, 3 und 4 zu dem Permanentmagneten die von dem Magnetfeld 5 überstrichene Fläche am Ort der Sensoren die Oberfläche des Pols übersteigt. Daraus wird deutlich, dass die Oberfläche des den Sensoren zugewandten Pols des Permanentmagneten auch kleiner als die Fläche dieses Rechtecks sein kann, sofern das Magnetfeld am Ort der Sensoren nur wenigstens die Fläche dieses Rechtecks überstreicht.

Die Hall-Sensoren 2, 3 und 4 sind derart beschaltet und ausgelegt, dass jeder der Hall-Sensoren 2, 3 und 4 immer dann ein elektrisches Signal mit einem logischen H-Pegel abgibt, wenn dieser Hall-Sensor von dem Magnetfeld 5 des Permanentmagneten überdeckt ist bzw. mit dem Magnetfeld 5 in Wechselwirkung steht und dass jeder der Hall-Sensoren 2, 3 und 4 immer dann ein elektrisches Signal mit einem logischen L-Pegel abgibt, wenn dieser Hall-Sensor nicht von dem Magnetfeld 5 des Permanentmagneten überdeckt ist bzw. nicht mit dem Magnetfeld 5 in Wechselwirkung steht. Die von den Schaltstellungssensoren 3 und 4 abgegebenen elektrischen Signale (Schaltstellungssignale) werden von der nicht dargestellten Auswerteeinheit nur dann hinsichtlich einer Änderung des Betriebszustandes des Getriebes berücksichtigt, wenn das von dem Schaltgassensensor 2 abgegebene Signal (Schaltgassensignal) einen logischen H-Pegel aufweist.

Jedes der Schaltstellungssignale ist einer logischen UND-Verknüpfung mit dem Schaltgassensignal unterzogen. Von den für diese Verknüpfung erforderlichen UND-Gattern werden die logischen Zustände der Schaltstellungssignale nur dann in Form der verknüpften Signale weitergegeben, wenn das Schaltgassensignal einen logischen H-Pegel aufweist.

Gemäß der Ausführungsform sind die beiden Ausgänge der UND-Gatter mit der Auswerteeinrichtung verbunden, wodurch die von den Sensoren abgegebenen und die jeweilige Schaltstellung charakterisierenden Signale mittelbar der Auswerteeinrichtung zugeführt sind.

### Bezugszeichenliste:

- 1: Schalthebel
- 2: Schaltgassensensor
- 3: Schaltstellungssensor
- 4: Schaltstellungssensor
- 5: Magnetfeld des Permanentmagneten am Ort der Sensoren
- A: erste Schaltgasse
- B: zweite Schaltgasse
- X: Neutralstellung
- Y: Aufwärtsstellung
- Z: Abwärtsstellung

## Patentansprüche

1. Schaltvorrichtung zum Umschalten zwischen unterschiedlichen Betriebszuständen eines Kraftfahrzeuggetriebes, mit einem in einer Halterung bewegbar gelagerten Schalthebel (1), der in einer ersten Richtung zwischen zwei Schaltgassen (A, B) bewegbar ist und der ferner in einer zweiten Richtung entlang einer ersten der beiden Schaltgassen (A) in drei Schaltstellungen (X, Y, Z) bewegbar ist, einem Signalgeber zum Abgeben eines Gebersignals (5) und mit drei im Abstand zu dem Signalgeber und in Form eines Dreiecks angeordneten Sensoren (2, 3, 4) zum Erfassen des Gebersignals (5), wobei die Sensoren (2, 3, 4) und der Signalgeber mittels des Schalthebels (1) relativ zueinander bewegbar sind, und von den Sensoren (2, 3, 4) die jeweilige Schaltstellung (X, Y, Z) charakterisierende elektrische Signale zumindest mittelbar an eine Auswerteeinrichtung abgegeben werden, mittels welcher das Getriebe in Abhängigkeit von den elektrischen Signalen in unterschiedliche Betriebszustände stellbar ist, **dadurch gekennzeichnet, dass** der Signalgeber derart ausgebildet ist, dass
das Gebersignal (5) am Ort der Sensoren (2, 3, 4) eine Fläche überstreicht, die größer oder gleich der Fläche eines Rechtecks ist, in welcher das Dreieck deckungsgleich abbildbar ist,
eine Seite des Rechtecks parallel zur ersten Schaltgasse (A) verläuft, und
in einer ersten der drei Schaltstellungen (X) alle drei Sensoren (2, 3, 4) mit dem Gebersignal in Wechselwirkung stehen. -

2. Schaltvorrichtung nach Anspruch 1, **dadurch gekennzeichnet, dass** die das Gebersignal (5) abgebende aktive Fläche des Signalgebers kleiner oder gleich der Fläche des Rechtecks ist.

3. Schaltvorrichtung nach Anspruch 1 oder 2, **dadurch gekennzeichnet, dass** die Sensoren (2, 3, 4) fest an der Halterung angeordnet sind und der Signalgeber an dem Schalthebel (1) befestigt ist.

4. Schaltvorrichtung nach Anspruch 3, **dadurch gekennzeichnet, dass** der Schalthebel (1) schwenkbar gelagert ist und die Sensoren (2, 3, 4) auf einer gekrümmten Leiterplatte angeordnet sind.

5. Schaltvorrichtung nach einem der Ansprüche 1 bis 4, **dadurch gekennzeichnet, dass** der Signalgeber als Permanentmagnet und die Sensoren (2, 3, 4) als Hall-Sensoren ausgebildet sind.

6. Schaltvorrichtung nach einem der Ansprüche 1 bis 5, **dadurch gekennzeichnet, dass** die Sensoren (2, 3, 4) in Form eines gleichschenkeligen Dreiecks angeordnet sind, dessen von den beiden gleichen Schenkeln eingeschlossene Seite parallel zu der ersten Schaltgasse (A) verläuft.

7. Schaltvorrichtung nach einem der Ansprüche 1 bis 6, **dadurch gekennzeichnet, dass** derjenige Sensor (2) von den drei Sensoren (2, 3, 4), dessen Bild bei einer Projektion der drei Sensoren (2, 3, 4) auf die durch die zweite Richtung definierte Gerade das mittlere der drei Bilder ist, als Schaltgassensensor verwendet wird, und die beiden anderen Sensoren (3, 4) als Schaltstellungssensoren verwendet werden, wobei der Schaltgassensensor (2) auf der der zweiten Schaltgasse (B) abgewandten Seite der durch die beiden Schaltstellungssensoren (3, 4) definierten Geraden angeordnet ist.

8. Schaltvorrichtung nach Anspruch 7, **dadurch gekennzeichnet, dass** die erste Schaltstellung (X) diejenige Schaltstellung ist, die von dem Schalthebel (1) zuerst angenommen wird, wenn der Schalthebel (1) aus der zweiten Schaltgasse (B) in die erste Schaltgasse (A) bewegt wird.

9. Schaltvorrichtung nach Anspruch 8, **dadurch gekennzeichnet, dass** die Schaltstellungssensoren bzw. die von diesen abgegebenen elektrischen Signale von dem Schaltgassensensor deaktiviert sind, wenn der Schalthebel aus der ersten Schaltgasse herausbewegt ist und von dem Schaltgassensensor aktiviert sind, wenn der Schalthebel in die erste Schaltgasse hineinbewegt ist.

10. Schaltvorrichtung nach Anspruch 9, **dadurch gekennzeichnet, dass** jedes der von den Schaltstellungssensoren (3, 4) abgegebenen elektrischen Signale einer logischen UND-Verknüpfung mit dem vom Schaltgassensensor (2) abgegebenen elektrischen Signal unterzogen ist, wobei das verknüpfte Signal der Auswerteeinrichtung zugeführt ist.

## Claims

1. Shift device for shifting between different operating states of a motor vehicle transmission, comprising a shift lever (1), which is mounted movably in a mounting and movable in a first direction between two shifting gates (A, B) and is further movable in a second direction along a first of the two shifting gates (A) into three shift positions (X, Y, Z), a signal transmitter for supplying a transmitter signal (5) and comprising three sensors (2, 3, 4) disposed at a distance from the signal transmitter and arranged in the shape of a triangle for acquiring the transmitter signal (5), wherein the sensors (2, 3, 4) and the signal transmitter are movable relative to one another by means of the shift lever (1), and the sensors (2, 3, 4) supply electrical signals characterizing the respective shift position (X, Y, Z) at least indirectly to an evaluation device, by means of which the transmission in dependence upon the electrical signals is settable into different operating states, **characterized in that** the signal transmitter is designed in such a way that
the transmitter signal (5) at the location of the sensors (2, 3, 4) sweeps an area that is larger than or equal to the area of a rectangle, in which area the triangle is congruently mappable,
one side of the rectangle extends parallel to the first shifting gate (A), and
in a first of the three shift positions (X) all three sensors (2, 3, 4) are in interaction with the transmitter signal.

2. Shift device according to claim 1, **characterized in that** the active area of the signal transmitter that supplies the transmitter signal (5) is smaller than or equal to the area of the rectangle.

3. Shift device according to claim 1 or 2, **characterized in that** the sensors (2, 3, 4) are disposed in a fixed manner on the mounting and the signal transmitter is fastened to the shift lever (1).

4. Shift device according to claim 3, **characterized in that** the shift lever (1) is pivotably mounted and the sensors (2, 3, 4) are disposed on a curved printed-circuit board.

5. Shift device according to one of claims 1 to 4, **characterized in that** the signal transmitter takes the form of a permanent magnet and the sensors (2, 3, 4) take the form of Hall-effect sensors.

6. Shift device according to one of claims 1 to 5, **characterized in that** the sensors (2, 3, 4) are arranged in the shape of an isosceles triangle, of which the side enclosed by the two sides of equal length extends parallel to the first shifting gate (A).

7. Shift device according to one of claims 1 to 6, **characterized in that** of the three sensors (2, 3, 4) the sensor (2), the image of which upon projection of the three sensors (2, 3, 4) onto the straight line defined by the second direction is the middle of the three images, is used as the shifting gate sensor, and the two other sensors (3, 4) are used as shift position sensors, wherein the shifting gate sensor (2) is disposed at the opposite side of the straight line defined by the two shift position sensors (3, 4) to the second shifting gate (B).

8. Shift device according to claim 7, **characterized in that** the first shift position (X) is the shift position that is initially adopted by the shift lever (1) when the shift lever (1) is moved out of the second shifting gate (B) into the first shifting gate (A).

9. Shift device according to claim 8, **characterized in that** the shift position sensors and/or the electrical signals supplied by them are deactivated by the shifting gate sensor when the shift lever is moved out of the first shifting gate and are activated by the shifting gate sensor when the shift lever is moved into the first shifting gate.

10. Shift device according to claim 9, **characterized in that** each of the electrical signals supplied by the shift position sensors (3, 4) is subjected to an AND logic operation with the electrical signal supplied by the shifting gate sensor (2), wherein the combined signal is supplied to the evaluation device.

## Revendications

1. Dispositif de commutation pour commuter entre différents états de fonctionnement d'une boîte de vitesses de véhicule automobile, comportant un levier de changement de vitesse (1) monté déplaçable dans un support, lequel est déplaçable dans une première direction entre deux voies de commutations (A, B) et déplaçable en outre dans une seconde direction le long de l'une des deux voies de commutation (A) dans trois positions de commutation (X, Y, Z), comportant un transmetteur de signaux pour délivrer un signal de transmetteur (5) et trois capteurs (2, 3, 4), disposés à distance du transmetteur de signaux et sous la forme d'un triangle, pour détecter le signal de transmetteur (5), les capteurs (2, 3, 4) et le transmetteur de signaux étant déplaçables les uns par rapport aux autres au moyen du levier de changement de vitesse (1), et les capteurs (2, 3, 4) délivrant des signaux électriques caractérisant la position de commutation (X, Y, Z) respective, au moins indirectement, à un dispositif d'interprétation, au moyen duquel la boîte de vitesses est réglable, en fonction des signaux électriques, dans différents états de fonctionnement, **caractérisé en ce que** le transmetteur de signaux est conçu de manière que
le signal de transmetteur (5) passe, à l'endroit des capteurs (2, 3, 4), sur une surface qui est supérieure ou égale à la surface d'un rectangle dans lequel le triangle peut être reproduit en coïncidence,
un côté du rectangle s'étend parallèlement à la première voie de commutation (A), et
dans une première des trois positions de commutation (X), les trois capteurs (2, 3, 4) sont en interaction avec le signal de transmetteur.

2. Dispositif de commutation selon la revendication 1, **caractérisé en ce que** la surface active du transmetteur de signaux, délivrant le signal de transmetteur (5), est inférieure ou égale à la surface du rectangle.

3. Dispositif de commutation selon la revendication 1 ou 2, **caractérisé en ce que** les capteurs (2, 3, 4) sont disposés de manière fixe sur le support et le transmetteur de signaux est fixé au levier de changement de vitesse (1).

4. Dispositif de commutation selon la revendication 3, **caractérisé en ce que** le levier de changement de vitesse (1) est monté pivotant et les capteurs (2, 3, 4) sont disposés sur une carte de circuit imprimé courbée.

5. Dispositif de commutation selon l'une quelconque des revendications 1 à 4, **caractérisé en ce que** le transmetteur de signaux est réalisé sous la forme d'un aimant permanent et les capteurs (2, 3, 4) sous la forme de capteurs à effet Hall.

6. Dispositif de commutation selon l'une quelconque des revendications 1 à 5, **caractérisé en ce que** les capteurs (2, 3, 4) sont disposés sous la forme d'un triangle isocèle, dont la face comprise entre les deux côtés égaux s'étend parallèlement à la première voie de commutation (A).

7. Dispositif de commutation selon l'une quelconque des revendications 1 à 6, **caractérisé en ce que** le capteur (2), parmi les trois capteurs (2, 3, 4), dont l'image est l'image centrale des trois images, en cas de projection des trois capteurs (2, 3, 4) sur la droite définie par la deuxième direction, est utilisé comme capteur de voie de commutation, et les deux autres capteurs (3, 4) sont utilisés comme capteurs de position de commutation, le capteur de voie de commutation (2) étant disposé sur le côté, tourné à l'opposé de la deuxième voie de commutation (B), des droites définies par les deux capteurs de position de commutation (3, 4).

8. Dispositif de commutation selon la revendication 7, **caractérisé en ce que** la première position de commutation (X) est la position de commutation, qui est prise d'abord par le levier de commutation (1), lorsque le levier de commutation (1) est déplacé de la deuxième voie de commutation (B) à la première voie de commutation (A).

9. Dispositif de commutation selon la revendication 8, **caractérisé en ce que** les capteurs de position de commutation ou les signaux électriques délivrés par ceux-ci sont désactivés par le capteur de voie de commutation, lorsque le levier de changement de vitesse est sorti de la première voie de commutation, et sont activés par le capteur de voie de commutation, lorsque le levier de changement de vitesse est déplacé à l'intérieur de la première voie de commutation.

10. Dispositif de commutation selon la revendication 9, **caractérisé en ce que** chacun des signaux électriques, délivrés par les capteurs de position de commutation (3, 4), est soumis à une opération logique ET avec le signal électrique délivré par le capteur de voie de commutation (2), le signal logique étant envoyé au dispositif d'interprétation.
